(19) Europäisches Patentamt / European Patent Office / Office européen des brevets

(11) **EP 3 451 242 A1**

(12) **EUROPEAN PATENT APPLICATION**
published in accordance with Art. 153(4) EPC

(43) Date of publication:
06.03.2019 Bulletin 2019/10

(51) Int Cl.:
*G06N 3/08* (2006.01)

(21) Application number: 16899905.0

(22) Date of filing: 05.05.2016

(86) International application number:
PCT/CN2016/081114

(87) International publication number:
WO 2017/185394 (02.11.2017 Gazette 2017/44)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 29.04.2016 CN 201610285062

(71) Applicant: Cambricon Technologies Corporation
Limited
Beijing 100190 (CN)

(72) Inventors:
• GUO, Qi
  Beijing 100190 (CN)
• ZHANG, Shijin
  Beijing 100190 (CN)
• CHEN, Yunji
  Beijing 100190 (CN)
• CHEN, Tianshi
  Beijing 100190 (CN)

(74) Representative: AWA Sweden AB
P.O. Box 5117
200 71 Malmö (SE)

(54) **DEVICE AND METHOD FOR PERFORMING REVERSETRAINING OF FULLY CONNECTED LAYERS OF NEURAL NETWORK**

(57) The present invention provides a device for performing a reverse training for fully connected layers of artificial neural network, comprising an instruction storage unit (1), a controller unit (2), a data access unit (3), an interconnection module (4), a master operation module (5) and a plurality of slave operation modules (6). The device can implement a reverse training of fully connected layers of artificial neural network. For each layer, an output gradient vector of the layer is first calculated by weighted summation of the input gradient vector. The output gradient vector is multiplied by the derivative value of the activation function of the next layer in the forward propagation process to obtain an input gradient vector of the next layer. The input gradient vector is multiplied by the input neuron upon forward propagation process to obtain a gradient of the weight for this layer, and then the weight of this layer can be updated according to the obtained gradient of the weight for this layer.

FIG 2

EP 3 451 242 A1

**Description**

**FIELD OF THE INVENTION**

The present invention generally relates to the artificial neural network, in particular, to a device and method for performing a reverse training for fully connected layers of artificial neural network.

**BACKGROUND OF THE INVENTION**

Artificial neural networks are widely used in the fields of pattern recognition, image processing, function approximation and optimization calculation. Due to high recognition accuracy and good parallelism, multi-layer artificial networks have received more and more attention in the academic and industrial circles in recent years.

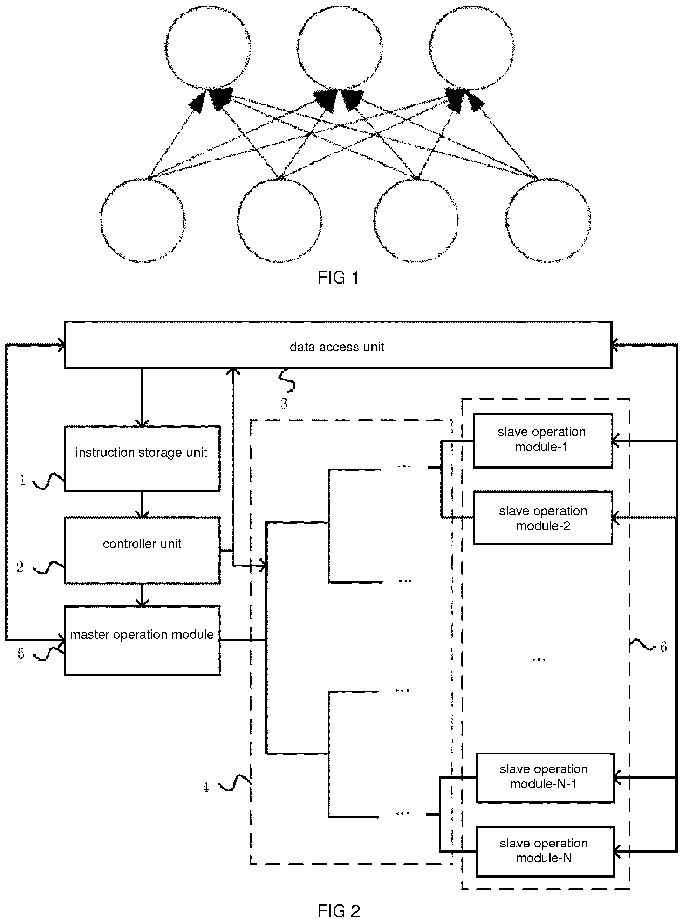

Artificial neural network fully connected layer is a common type of artificial neural network, just like the neural network in the brain. The artificial neural network fully connected layer is composed of several interconnected nodes. As shown in Fig. 1, each circle represents a neuron. Each arrow represents the connection between two neurons and is also called a weight. All inputs and outputs are connected to each other.

The calculation formula for neurons can be simply described as: $y = f(\sum_{i=0}^{n} w_i * x_i + b)$. Where x denotes all input neurons connected to the output neuron, w denotes the corresponding weight between x and the output neuron, and b is a constant. f(x) is a non-linear function, usually called an activation function. Commonly used functions are:

$$\frac{1}{1+e^{-x}}, \frac{e^x - e^{-x}}{e^x + e^{-x}}, \text{ etc.}$$

Another known method supporting forward propagation process of artificial neural network fully connected multi-layer is using the general-purpose processor. This method supports the above algorithm by using general-purpose register files and general-purpose functions to execute general instructions. One of the disadvantages for this method is that the performance of a single general-purpose processor is low, and it cannot meet the performance requirements of the reverse training for the fully connected layers of the usual artificial neural network. When multiple general-purpose processors are used to perform in parallel, the mutual communication between general purpose processors also becomes a performance bottleneck. In addition, the general-purpose processor has to decode the backward operation of fully connected layers of artificial neural network into a long column of operations and memory access instruction sequence, and the processor front-end decoding brings a large power consumption overhead.

Another known method supporting a reverse training of fully connected layers of artificial neural network is using the graphics processor (GPU). This method supports the above algorithm by using general-purpose register stacks and universal stream processing unit to execute general SIMD instructions. Since the GPU is a device dedicated to performing graphic image operations and scientific operations without dedicated support for a reverse training of fully connected layers of artificial neural network, it still requires a large amount of front-end decoding to perform operations of fully connected layers of artificial neural network, bringing a lot of extra costs. In addition, the GPU has only a small on-chip storage, and the model data (weights) of the fully connected layers of artificial neural networks have to be read from off-chip repeatedly. So off-chip bandwidth becomes a major performance bottleneck. In addition, the GPU has only a small on-chip cache, and the model data (weights) of multi-layer artificial neural networks have to be transferred from off-chip repeatedly. So off-chip bandwidth becomes a major performance bottleneck and brings a large power consumption overhead.

**OBJECTS AND SUMMARY OF THE INVENTION**

One aspect of the present invention provides a device performing a reverse training for fully connected layers of artificial neural network, comprising an instruction storage unit, a controller unit, a data access unit, an interconnection module, a master operation module and a plurality of slave operation modules, wherein:

the instruction storage unit is used to store instructions;
the controller unit is used to read the instruction from the instruction storage unit and translates it into a control signal for controlling the behaviors of the interconnect module, the master operation module and the plurality of slave operation module;
the data access unit performs data or instruction read and write operation between the external address space and the device;
at the stage when the reverse training for each layer of artificial neural network begins to calculate, the master operation module transfers an input gradient vector of this layer to all the slave operation modules through the interconnection module;

each slave operation module calculates the product of the corresponding partial scalar element in the input gradient vector and the corresponding column of a weight matrix to obtain the sum of the output gradient vector part;

after the calculation of the slave operation module is completed, the interconnection module combines level by level an output gradient vector part sum of each slave operation module into an output gradient vector of this layer;

the master operation module uses the output gradient vector of this layer to complete subsequent calculations in the calculation process of each layer.

Another aspect of the present invention provides a method for performing a reverse training for single-layer fully connected layer of artificial neural network using above device.

Another aspect of the present invention provides a method for performing a reverse training for single-layer fully connected layers of artificial neural network using above device.

The present invention can be applied to the following (including but not limited to) scenes: various electronics such as data processing, robot, computer, printer, screener, telephone, tablet, smart terminal, cell phone, tachograph, navigator, sensor, camera, cloud server, camera, video camera, projector, watch, headset, mobile storage, wearable device; various transportation tools such as plane, ship, vehicle; various household appliances such as TV, A/C, microwave, fridge, electric cooker, humidifier, washing machine, electric light, gas stove, range hood; and various medical equipment including nuclear magnetic resonance, B ultrasound, electrocardiograph.

## BRIEF DESCRIPTION OF FIGURES

For a more complete understanding of the present invention and its advantages, reference will now be made to the following description taken in conjunction with the accompanying drawings, in which:

Fig. 1 illustrates a structural view of fully connected layers of artificial neural network.

Fig. 2 is a schematic block view of the overall structure of the device for performing the reverse training of fully connected layers of artificial neural network, according to the embodiments of the present invention.

Fig. 3 is a schematic view illustrating the structure of the H-tree module (one implementation of interconnection module) in the device for performing the reverse training of fully connected layers of artificial neural network, according to the embodiments of the present invention.

Fig. 4 is an example block view of the structure of the master operation module in the device for performing the reverse training of fully connected layers of artificial neural network, according to the embodiments of the present invention.

Fig. 5 is an example block view of the structure of the slave operation module in the device for performing the reverse training of fully connected layers of artificial neural network, according to the embodiments of the present invention.

Fig. 6 is an example block view of the reverse training process of fully connected layers of artificial neural network, according to the embodiments of the present invention.

Fig. 7 is a flow chart of the process of the reverse training of single fully connected layer of artificial neural network, according to the embodiments of the present invention.

In all the drawings, the same devices, components, units, etc. are denoted with the same reference numerals.

## DETAILED DESCRIPTION OF THE EMBODIMENTS

Other aspects, advantages, and salient features of the invention will become apparent to those skilled in the art from the following detailed description of exemplary embodiments of the invention in conjunction with the accompanying drawings.

In the present invention, the terms "include" and "including" and derivatives thereof are intended to be inclusive and not limiting; the term "or" is inclusive, meaning "and/or".

In the present specification, the following various embodiments for describing the principles of the present invention are merely illustrative and should not be construed in any way as limiting the scope of the invention. The following description with reference to the accompanying drawings is provided to assist in a comprehensive understanding of exemplary embodiments of the invention as defined by the claims and their equivalents. The following description includes various specific details to assist in that understanding but these details are to be regarded as merely exemplary. Accordingly, those of ordinary skill in the art will recognize that various changes and modifications of the embodiments described herein can be made without departing from the scope and spirit of the invention. In addition, descriptions of well-known functions and constructions are omitted for clarity and conciseness. Moreover, like reference numerals are used for like functions and operations throughout the drawings.

In the reverse training of single fully connected layer of artificial neural network according to embodiments of the present invention, for each layer, an output gradient vector of this layer is first calculated by weighted summation of the input gradient vector. The output gradient vector is multiplied by the derivative value of the activation function of the next layer in the forward propagation process to obtain an input gradient vector of the next layer. The input gradient vector is multiplied by the input neuron upon forward propagation process to obtain a gradient of the weight for this layer, and then the weight of this layer may be updated according to the obtained gradient of the weight for this layer.

Fig. 2 is a schematic block view of the overall structure of the device for performing the reverse training of fully connected layers of artificial neural network, according to the embodiments of the present invention. As shown in Fig. 2, the device includes an instruction storage unit 1, a controller unit 2, a data access unit 3, an interconnection module 4, a master operation module 5 and a plurality of slave operation modules 6. The instruction storage unit 1, controller unit 2, data access unit 3, interconnection module 4, master operation module 5 and the plurality of slave operation modules 6 may implemented by a hardware circuit (e.g. including but not limited to FPGA, CGRA, ASICs, analog circuits and memristors).

The instruction storage unit 1 reads an instruction through the data access unit 3 and stores the read instruction.

The controller unit 2 reads the instruction from the instruction storage unit 1 and translates it into a control signal for controlling the behavior of other modules and sends it to other modules including the data access unit 3, the master operation module 5 and the plurality of slave operation module 6.

The data access unit 3 may access an external address space, and directly read and write the data to each storage unit in the device for completing loading and storage of the data.

The interconnection module 4 is used to connect the master operation module and the slave operation module, and may implement different interconnection topologies (such as tree structure, ring structure, grid structure, hierarchical interconnection, bus structure).

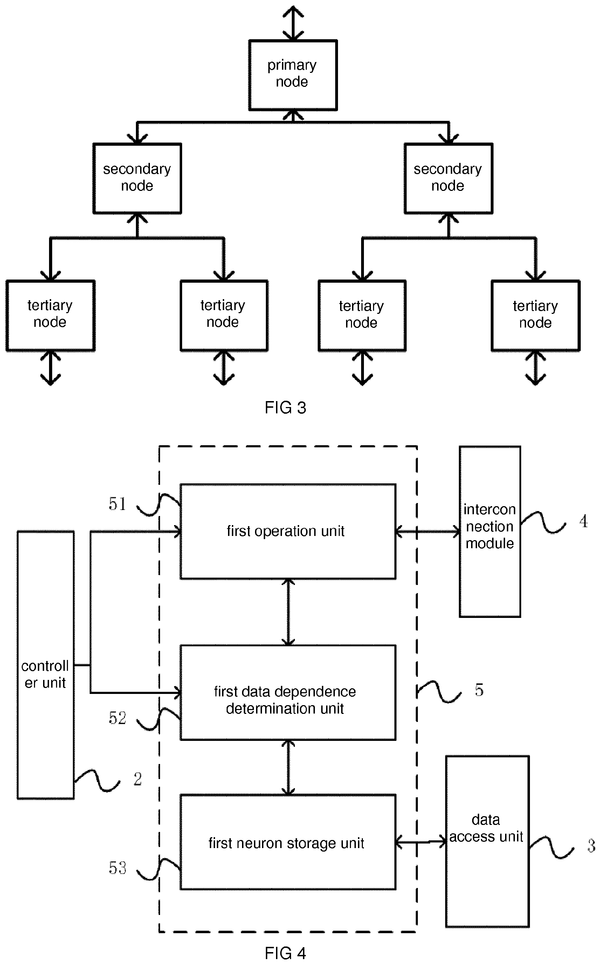

Fig. 3 illustrates one embodiment of the interconnection module 4: H-tree structure. The interconnection module 4 constitutes a data path between the master operation module 5 and the plurality of slave operation modules 6 and has an H-tree structure. H-tree is a binary tree path formed by a plurality of nodes. Each node equally sends the upstream data to two downstream nodes, merges the data returned by the two downstream nodes and returned them to the upstream nodes. For example, in the process of reverse operation for fully connected layers of the artificial neural network, the vector returned by the two downstream nodes may be added into a vector in the current node, which is returned to the upstream node. In the stage of starting the operation of each fully connected layer of artificial neural network, the input gradient in the master operation module 5 is sent to each slave operation module 6 through the interconnect module 4; after the calculation process of the slave operation module 6 is completed, the output gradient vector part sums output from each slave operation module 6 may add with each other level by level in the interconnection module 4, i.e. all output gradient vector part sums are summed as a final output gradient vector.

Fig. 4 is an example block view of the structure of the master operation module 5 in the device for performing the reverse training of fully connected layers of artificial neural network, according to the embodiments of the present invention. As shown in Fig. 4, the master operation module 5 includes a first operation unit 51, a first data dependence determination unit 52, and the first neuron storage unit 53.

The first neuron storage unit 53 is used to store the input data and the output data used by the master operation module 5 in the calculation process. The first operation unit 51 completes various operation functions of the master operation module, including a summation of weight update gradient and a derivative operation in reverse training of fully connected layers of artificial neural network. The first data dependence determination unit 52 is a port where the first operation unit 51 reads and writes the first neuron storage unit 53 and may ensure there is no read and write consistency of the data in the neuron storage unit 53. Specifically, the data dependence determination unit 52 determines whether there is a dependency between the control signal that has not been performed and the data of the control signal that is being performed; if not, allowing the control signal to be transmitted immediately; otherwise the control signal being not allowed to transmit until all the control signals on which the control signal depends are completely performed. For example, all control signals sent to the first data dependence unit 52 are stored in an control signal queue internal to the first data dependence unit 52 in which if the range of reading data for the read control signal conflicts with the range of writing data for the write control signal located in front of the queue, then the control signal should not be performed until the dependent write control signal is performed. At the same time, the first data dependence determination unit 52 is also responsible for sending the input gradient vector read from the first neuron storage unit 53 to the slave operation module 6 through the interconnection module 4, and the output data of the slave operation module 6 is sent directly to the operation unit 51 through the interconnection module 4. The instruction output from the controller unit 2 is sent to the first operation unit 51 and the first dependence determination unit 52 to control their behaviors.

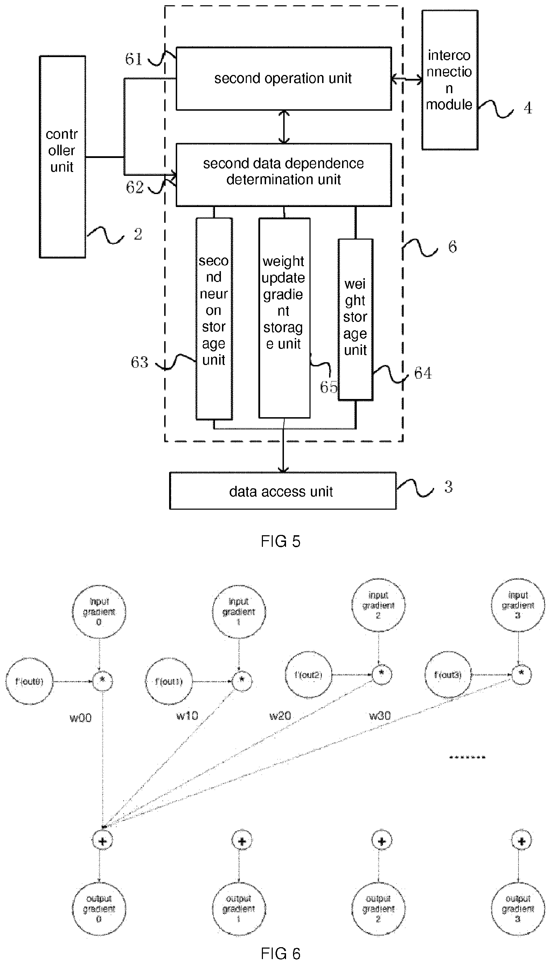

Fig. 5 is an example block view of the structure of the slave operation module 6 in the device for performing the reverse training of fully connected layers of artificial neural network, according to the embodiments of the present invention. As shown in Fig. 5, each slave operation module 6 includes a second operation unit 61, a second data dependence determination unit 62, a second neuron storage unit 63, a weight storage unit 64 and a weight update

4

gradient storage unit 65.

The second operation unit 61 receives a control signal sent by the controller unit 2 and performs arithmetic and logic operation.

The second data dependence determination unit 62 is responsible for the reading and writing operation to the second neuron storage unit 63 in the calculation process. The second data dependence determination unit 62 ensures there is no read and write consistency to the second neuron storage unit. Specifically, the second data dependence determination unit 62 determines whether there is a dependency between the control signal that has not been performed and the data of the control signal that is being performed; if not, allowing the control signal to be transmitted immediately; otherwise the control signal being not allowed to transmit until all the control signals on which the control signal depends are completely performed. For example, all control signals sent to the second data dependence unit 62 are stored in an control signal queue internal to the second data dependence unit 62 in which if the range of reading data for the read control signal conflicts with the range of writing data for the write control signal located in front of the queue, then the control signal should not be performed until the dependent write control signal is performed.

The second neuron storage unit 63 stores a scalar data corresponding to the slave operation module 6 in the input gradient vector data and the output gradient vector part sum calculated by the slave operation module 6.

The weight storage unit 64 stores the weight data required by the slave operation module 6 in the calculation process. Each slave operation module stores a column corresponding to the scalar data stored by the slave operation module 6 in the weight matrix.

The weight update gradient storage unit 65 stores a weight update gradient data required by respective slave operation module in updating the weight. Each of the weight update gradient data stored in the slave operation module 6 corresponds to the stored weight data.

The slave operation module 6 implements the updating of the first half that may be in parallel and weight in the process of operating the output gradient vector by the reverse training of single fully connected layer of artificial neural network The process of calculating the output gradient vector by the reverse training is described out_gradient = w*in_gradient, wherein the multiplication of the weight matrix w and the input gradient vector in_gradient may be divided into uncorrelated parallel computing subtasks, where out_gradient and in_gradient are column vectors. Each slave operation module calculates the multiplication of the corresponding partial scalar element in in_gradient and the column corresponding to the weight matrix w, and each output vector obtained is a to-be-accumulated part sum of the final result, and these part sums are combined to obtain the final result in the interconnection module 4. Therefore, the calculation process becomes a a parallel calculation part and the subsequent combination process. Each of the slave operation modules 6 calculates a part sum of the output gradient vector, and all the part sum in the interconnection module 4 complete the splicing operation to obtain the final output gradient vector. Each slave operation module 6 also calculates a weight gradient according to the output neuron and output gradient of each layer to update the weight stored by the present slave operation module 6. Forward propagation process and reverse training are two main processes of ANN. To train (update) the weight in the network, the artificial neural network first has to calculate the forward output of the input vector in the current weighted network. This is a forward process. Then it has to train the weight of each layer (updated) in a backward direction layer by layer according to the difference between the output value and the labeled value of the input vector itself. In the forward propagation process, the output vector of each layer and the derivative value of the activation function are saved. These data are required for the reverse training process, so these data are guaranteed to exist at the beginning of the reverse training. The output value of each layer in the forward propagation process is data existing at the beginning of the backward operation, and may be stored in the master operation module through the data access unit 3 and sent to the slave operation module through the interconnection module. The master operation module 5 performs subsequent calculations based on the output gradient vector. For example, the input gradient value of the next layer is obtained by multiplying the output gradient vector by the derivative of the activation function in the forward propagation process. The derivative of the activation function at the time of forward calculation is already existing data at the start of the backward operation and can be stored in the master operation module through the data access unit.

According to embodiments of the present invention, an instruction set for performing the reverse training of fully connected layers of artificial neural network on above device is provided. The instruction set also includes a COMPUTE instruction, a CONFIG instruction, an IO instruction, a NOP instruction, a JUMP instruction and a MOVE instruction, wherein:

the COMPUTE instruction configures various constants required for the current layer operation before the calculation for each layer of fully connected layers of artificial neural network starts;

the COMPUTE instruction completes an arithmetic and logic calculation for each layer of fully connected layers of artificial neural network;

the IO instruction allows for reading in the input data required in operation from the external address space and storing the data back to the external space after the operation is completed;

the NOP instruction is responsible for clearing control signals in all control signal queues in the current device to ensure that all control signals before the NOP instruction have been instructed. The NOP instruction itself does not contain any operations;

the JUMP instruction is responsible for controlling the jump of the next instruction address to be read from the instruction storage unit for the jump of the control flow;

the MOVE instruction is responsible for replicating the data at a certain address space in the device's internal address space to another address in the device's internal address space. This process is independent of the operation unit and does not occupy the resources of the operation unit during operation.

Fig. 6 is an example block view of the reverse training process of fully con nected layers of artificial neural network, according to the embodiments of the p resent invention. The process of calculating the output gradient vector is out gr adient = w*in_gradient, wherein the matrix vector multiplication of the weight matrix w and the input gradient vector in_gradient can be divided into uncorrela ted parallel computing subtasks. Each slave operation module 6 calculates a par t sum of the output gradient vector, and all part sums are combined to obtain the final output gradient vector in the interconnection module 4. The output gradie nt vector input gradient [input gradient0, input gradient1, input gradient2, input gradient3] of the previous layer in Fig. 6 is multiplied by the corresponding acti vation function derivative [f'(out0), f'(outl), f'(out2), f'(out3)] to obtain the in put gradient vector in_gradient of this layer, and then is multiplied by the weigh t matrix w[w00, w10, w20, w30] to obtain the output gradient vector output gra dient [output gradient0, output gradient1, output gradient 2, Output gradient3].

Specifically, referring to FIG. 6, input gradient (input gradient0,..., input gr adient3] in FIG. 6) is an output gradient vector of an n+1-th layer, which is first1 y multiplied by the derivative value ([f'(out0),..., F'(out3)]) in FIG. 6) of the n-t h layer in the forward propagation process to obtain an input gradient vector of t he n-th layer. This process is completed in the master operation module 5, and is sent to the slave module 6 through the interconnection module 4 and temporaril y stored in the neuron storage unit 63 of the slave operation module 6. Then the input gradient vector is multiplied by the weight matrix to obtain an input gradi ent vector of the n-th layer. In this process, the i-th slave operation module calc ulates the multiplication product of the i-th scalar in the input gradient vector an d the column vector [w_i0,..., W_iN] in the weight matrix, and the resulting out put vector is combined in the interconnection module 4 to obtain the final outpu t gradient vector output gradient ([output gradient0,..., output gradient3] in FIG. 6).

The process of calculating the weight update gradient is as follows: assumi ng that x is the output neuron vector of the n-th layer, the master operation mod ule 5 transmits the output neuron vector to each slave operation module through the interconnection module 4. The master operation module 5 also transmits th e output gradient vector in_gradient of the (n+1)-th layer to each slave operatio n module 6 through the interconnection module 4. Each slave operation module 6 multiplies the scalar data corresponding to the slave operation module 6 in the output gradient vector in_gradient by an output neuron vector x to obtain an ori ginal weight update gradient vector dw original of the n-th layer of this slave o peration module. After calculating the original weight update gradient vector of all layers, the master operation module may process the original weight update gradient in order to limit the range of the weight gradient. Firstly, setting a posit ive constant clip gradient; then calculating the sum of squares sumsq_diff of th e original weight update gradient of all layers and updates the gradient; and then executing the sumsq_diff, to obtain 12norm_diff; If 12norm_diff is greater than clip_gradient, a scale factor scale_factor=clip_gradient/12norm_diff is obtaine d. All the original weight update gradients dworiginal are respectively multipli ed by this scale factor scale_factor to obtain a weight update gradient dw.

After the scale dw is obtained, the weight update gradient dw' used when using w, dw and previous update weight is used to update the weight w accordin g to a learning rate $\alpha$, a momentum m, and a weight attenuation coefficient $\eta$ set by the instruction. A typical way to update the weight is: $w=\eta*w+\alpha*(dw+ m*d w')$. Another typical way to update the weight is: $w=w+ *dw$.

According to embodiments of the present invention, each slave operation module stores a column vector corresponding to the slave operation module in w, dw, and dw'.

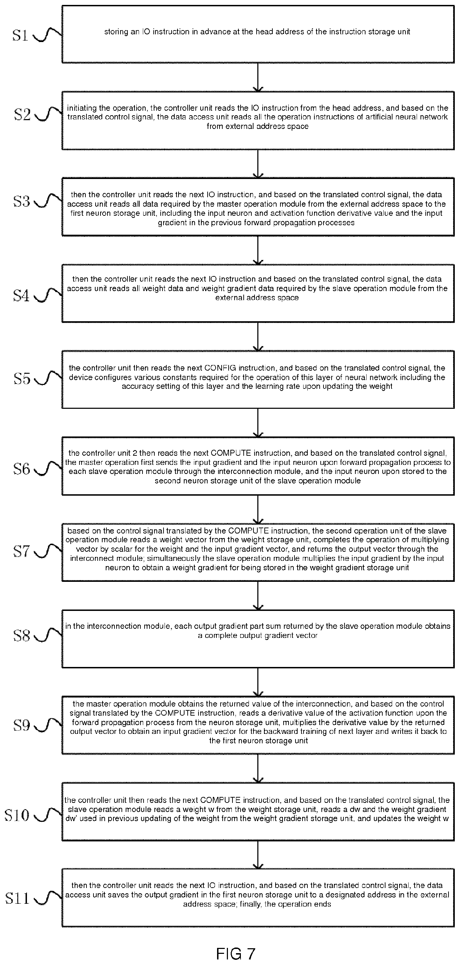

Fig. 7 is a flow chart of the process of the reverse training of single fully connected layer of artificial neural network, according to an embodiment of the present invention. The flow chart describes the process of reverse training for single-layer fully connected layer of artificial neural network shown in Fig. 6 using the device and instruction set of the present invention.

At step S1, storing an IO instruction in advance at the head address of the instruction storage unit 1.

At step S2, initiating the operation, the controller unit 2 reads the IO instruction from the head address of the instruction storage unit 1, and based on the translated control signal, the data access unit 3 reads all instructions related to the reverse training of fully connected layers for single-layer artificial neural network from an external address space and stores them in the instruction storage unit 1.

At step S3, then the controller unit 2 reads the next IO instruction from the instruction storage unit, and based on the translated control signal, the data access unit 3 reads all data required by the master operation module 5 from the external address space to the first neuron storage unit 53 of the master operation module 5, the data including the input neuron and activation function derivative value and the input gradient vector in the previous forward propagation processes.

At step S4, then the controller unit 2 reads the next IO instruction from the instruction storage unit, and based on the translated control signal, the data access unit 3 reads all weight data and weight update gradient data required by the slave operation module 6 from the external address space to the first storage unit of the master operation module and stores them to the corresponding weight storage unit 64 and weight update gradient storage unit 65 of the slave operation module 6 respectively.

At step S5, the controller unit 2 then reads the next CONFIG instruction from the instruction storage unit, and based on the translated control signal, the first and second operation units configure values of the internal register of the operation unit, including various constants required for calculation in the artificial neural network of this layer, an accuracy setting for the calculation of this layer, and a learning rate upon updating the weight.

At step S6, the controller unit 2 then reads the next COMPUTE instruction from the instruction storage unit, and based on the translated control signal, the master operation unit 5 sends the input gradient vector and the input neuron upon forward propagation process to each slave operation module 6 through the interconnection module 4, and the input gradient vector and the input neuron upon forward propagation process are stored to the second neuron storage unit 63 of the slave operation module 6.

At step S7, based on the control signal translated by the COMPUTE instruction, the second operation unit 61 of the slave operation module 6 reads a weight vector (i.e. part of the column of weight matrix stored by the slave operation module) from the weight storage unit 64, completes the operation of multiplying vector by scalar for the weight vector and the input gradient vector, and returns the output vector part sum through the interconnect module 4; simultaneously the slave operation module 6 multiplies the input gradient vector by the input neuron to obtain a weight update gradient for being stored in the weight update gradient storage unit 65.

At step S8, in the interconnection module 4, each output gradient part sum returned by the slave operation module 6 obtains a complete output gradient vector by a combination operation of the interconnect module.

At step S9, the master operation module 5 obtains the returned value of the interconnection module 4, and based on the control signal translated by the COMPUTE instruction, reads a derivative value of the activation function upon the forward propagation process from the first neuron storage unit 53, multiplies the derivative value by the returned output vector to obtain an input gradient vector for the reverse training of next layer and writes it back to the first neuron storage unit 53.

At step S10, the controller unit 2 then reads the next COMPUTE instruction from the instruction storage unit, and based on the translated control signal, the slave operation module 6 reads a weight w from the weight storage unit 64, reads a current weight update gradient dw and the weight update gradient dw' used in previous updating of the weight from the weight update gradient storage unit, and updates the weight w according to the learning rate $\alpha$, the momentum m, and the weight attenuation coefficient $\eta$.

At step S11, then the controller unit reads the next IO instruction from the instruction storage unit, and based on the translated control signal, the data access unit 3 saves the output gradient vector in the first neuron storage unit 53 to a designated address in the external address space; finally, the operation ends.

For multi-layer neural network fully connected layer, its implementation is similar to that of single-layer fully connected layer of artificial neural network. After performing the previous artificial neural network, the operation instruction of the next layer may use the output gradient vector calculated in the master operation module as the input gradient vector for the training of next layer to perform above calculation process, the weight address and weight update gradient address in the instruction correspondingly being also changed to the corresponding addresses of this layer.

Through employing a device and an instruction set for performing a reverse training of fully connected layers of artificial neural network, the problems of insufficient CPU and GPU performance in operation and large front-end decoding. It effectively improves the support for the reverse training for multi-layer fully connected layers of artificial neural network.

Through employing a dedicated on-chip storage for the reverse training for multi-layer fully connected layer of artificial neural network, the reusability of input neuron and convolution kernel data is fully tapped to avoid repeatedly reading these data into memory, reducing memory access bandwidth and avoiding the problem that the memory bandwidth becomes a bottleneck in the performance of the reverse training for multi-layer fully connected layer of artificial neural network.

Processes or methods depicted in the preceding figures may be implemented by the processing logic including hardware (eg, circuitry, dedicated logic, etc.), firmware, software (eg, software embodied on a non-transitory computer readable medium) or the combination thereof to perform. Although the processes or methods are described above in terms of certain sequential operations, it should be understood that some of the described operations can be performed in a different order. In addition, some operations may be performed in parallel rather than sequentially.

In the foregoing specification, various embodiments of the present invention have been described with reference to specific exemplary embodiments thereof. Obviously, various modifications may be made to the embodiments without departing from the broader spirit and scope of the invention as set forth in the appended claims. Accordingly, the specification and drawings are to be regarded in an illustrative rather than a restrictive sense.

**Claims**

1. A device for performing a reverse training of fully connected layers of artificial neural network, comprising an instruction storage unit, a controller unit, a data access unit, an interconnection module, a master operation module and a plurality of slave operation modules, wherein:

   the instruction storage unit is used to store instructions;
   the controller unit is used to read the instruction from the instruction storage unit and translates it into a control signal for controlling the behaviors of the interconnect module, the master operation module and the plurality of slave operation module;
   the data access unit performs data or instruction read and write operation between the external address space and the device;
   at the stage when the reverse training for each layer of fully connected layers of artificial neural network begins to calculate, the master operation module transfers an input gradient vector of this layer to all the slave operation modules through the interconnection module;
   each slave operation module calculates the product of the corresponding partial scalar element in the input gradient vector and the corresponding column of a weight matrix to obtain the sum of the output gradient vector part;
   after the calculation of the slave operation module is completed, the interconnection module combines level by level an output gradient vector part sum of each slave operation module into an output gradient vector of this layer;
   the master operation module uses the output gradient vector of this layer to complete subsequent calculations in the calculation process of each layer.

2. The device according to claim 1, wherein the master operation module multiplies alignedly the output gradient vector of each layer with the activation function derivation value of the next layer as an input gradient vector of the next layer.

3. The device according to claim 1, wherein the master operation module includes a first operation unit, a first data dependence determination unit, and a first neuron storage unit, wherein:

   the first neuron storage unit is used to store the input data and the output data used by the master operation module in the calculation process;
   the first operation unit completes various operation functions of the master operation module;
   the first data dependence determination unit is a port where the first operation unit reads and writes the first neuron storage unit, guarantees that there is no inconsistency conflict in reading and writing the discrete or continuous data of the first neuron storage unit, and is responsible for reading an input gradient vector from the first neuron storage unit, and sending it to each slave operation module through the interconnection module; and the output gradient vector from the interconnection module is sent to the first operation unit.

4. The device according to claim 1, wherein each slave operation module includes a second operation unit, a second data dependence determination unit, a second neuron storage unit, a weight storage unit and a weight update gradient storage unit, wherein:

   the second operation unit receives a control signal sent by the controller unit and performs arithmetic and logic operation;
   the second data dependence determination unit is responsible for the reading and writing operation to the second neuron storage unit, the weight storage unit and the weight update gradient storage unit in the calculation process,
   guarantees that there is no consistency conflict in reading and writing the second neuron storage unit, the weight storage unit and the weight update gradient storage unit;
   the second neuron storage unit stores a scalar data corresponding to the slave operation module in the input gradient vector data and the output gradient vector part sum calculated by the slave operation module;

the weight storage unit stores a column corresponding to the scalar data stored by the slave operation module in the weight matrix; and

the weight update gradient storage unit stores a weight update gradient data required by the slave computing module in updating the weight, and each of the weight update gradient data stored in the slave operation module corresponds to the stored weight data.

5. The device according to claim 4, wherein
the process of calculating the weight update gradient is as follows:

assuming that x is the output neuron vector of the n-th layer, the master operation module transmits the output neuron vector to each slave operation module through the interconnection module and also transmits the output gradient vector in gradient of the (n+1)-th layer to each slave operation module through the interconnection module;

each slave operation module multiplies the scalar data corresponding to the slave operation module in the output gradient vector in_gradient by an output neuron vector x to obtain an original weight update gradient vector dw_original of the n-th layer of this slave operation module.

6. The device according to claim 5, wherein
after calculating the original weight update gradient vector of all layers, the master operation module processes an original weight update gradient, wherein it firstly sets a positive constant clip_gradient, then calculates the sum of squares sumsq_diff of the original weight update gradient of all layers and updates the gradient, and then forsums the sumsq_diff to obtain 12norm_diff; if 12norm_diff is greater than clip gradient, a scale factor scale_factor=clip_gradient/12norm_diff is obtained, and all the original weight update gradients dworiginal are respectively multiplied by this scale factor scale_factor to obtain a weight update gradient dw.

7. The device according to claim 6, wherein after the scale_dw is obtained, the weight update gradient dw' used when using w, dw and previous update weight is used to update the weight w according to a learning rate $\alpha$, a momentum m, and a weight attenuation coefficient $\eta$ set by the instruction.

8. The device according to claim 7, wherein the way to update the weight is:

$$w=\eta*w+\alpha*(dw+ m*dw' ) , \text{ or } w=w+\alpha*dw .$$

9. The device according to claim 7, wherein each slave operation module stores a column vector corresponding to the slave operation module in w, dw, and dw'.

10. A method for performing a reverse training for single-layer fully connected layers of artificial neural network, comprising:

at step S1, storing an IO instruction in advance at the head address of the instruction storage unit;

at step S2, initiating the operation, the controller unit reads the IO instruction from the head address of the instruction storage unit, and based on the translated control signal, the data access unit reads all instructions related to the reverse training of fully connected layers for single-layer artificial neural network from an external address space and stores them in the instruction storage unit;

at step S3, then the controller unit reads the next IO instruction from the instruction storage unit, and based on the translated control signal, the data access unit reads all data required by the master operation module from the external address space to the first neuron storage unit of the master operation module, the data including the input neuron and activation function derivative value and the input gradient vector in the previous forward propagation processes;

at step S4, then the controller unit reads the next IO instruction from the instruction storage unit, and based on the translated control signal, the data access unit reads all weight data and weight update gradient data required by the slave operation module from the external address space and stores them to the corresponding weight storage unit and weight update gradient storage unit of the slave operation module respectively;

at step S5, the controller unit then reads the next CONFIG instruction from the instruction storage unit, and based on the translated control signal, the first and second operation units configure values of the internal register of the operation unit, including various constants required for calculation in the artificial neural network of this layer, an accuracy setting for the calculation of this layer, and a learning rate upon updating the weight;

at step S6, the controller unit then reads the next COMPUTE instruction from the instruction storage unit, and based on the translated control signal, the master operation sends the input gradient vector and the input neuron upon forward propagation process to each slave operation module through the interconnection module, and the input gradient vector and the input neuron upon forward propagation process are stored to the second neuron storage unit of the slave operation module;

at step S7, based on the control signal translated by the COMPUTE instruction, the second operation unit of the slave operation module reads a weight vector from the weight storage unit 64, completes the operation of multiplying vector by scalar for the weight vector and the input gradient vector, and returns the output vector part sum through the interconnect module; simultaneously the slave operation module multiplies the input gradient vector by the input neuron to obtain a weight update gradient for being stored in the weight update gradient storage unit 65;

at step S8, in the interconnection module, each output gradient part sum returned by the slave operation module obtains a complete output gradient vector by a combination operation of the interconnect module;

at step S9, the master operation module obtains the returned value of the interconnection module, and based on the control signal translated by the COMPUTE instruction, reads a derivative value of the activation function upon the forward propagation process from the neuron storage unit, multiplies the derivative value by the returned output vector to obtain an input gradient vector for the reverse training of next layer and writes it back to the first neuron storage unit;

at step S10, the controller unit then reads the next COMPUTE instruction from the instruction storage unit, and based on the translated control signal, the slave operation module reads a weight w from the weight storage unit, reads a current weight update gradient dw and the weight update gradient dw' used in previous updating of the weight from the weight update gradient storage unit, and updates the weight w according to the learning rate $\alpha$, the momentum m, and the weight attenuation coefficient $\eta$; and

at step S11, then the controller unit reads the next IO instruction from the instruction storage unit, and based on the translated control signal, the data access unit saves the output gradient vector in the first neuron storage unit to a designated address in the external address space; finally, the operation ends.

11. A method for performing a reverse training for multi-layer fully connected layers of artificial neural network, comprising:

for each layer, performing the method according to claim 10; and

after performing the previous fully connected layer of artificial neural network, the operation instruction of the next layer uses the output gradient vector calculated in the master operation module as the input gradient vector for the training of next layer to perform the method according to claim 10, the weight address and weight update gradient address in the instruction correspondingly being changed to the corresponding addresses of this layer.

FIG 1

FIG 2

FIG 3

FIG 4

FIG 5

FIG 6

S1 — storing an IO instruction in advance at the head address of the instruction storage unit

S2 — initiating the operation, the controller unit reads the IO instruction from the head address, and based on the translated control signal, the data access unit reads all the operation instructions of artificial neural network from external address space

S3 — then the controller unit reads the next IO instruction, and based on the translated control signal, the data access unit reads all data required by the master operation module from the external address space to the first neuron storage unit, including the input neuron and activation function derivative value and the input gradient in the previous forward propagation processes

S4 — then the controller unit reads the next IO instruction and based on the translated control signal, the data access unit reads all weight data and weight gradient data required by the slave operation module from the external address space

S5 — the controller unit then reads the next CONFIG instruction, and based on the translated control signal, the device configures various constants required for the operation of this layer of neural network including the accuracy setting of this layer and the learning rate upon updating the weight

S6 — the controller unit 2 then reads the next COMPUTE instruction, and based on the translated control signal, the master operation first sends the input gradient and the input neuron upon forward propagation process to each slave operation module through the interconnection module, and the input neuron upon stored to the second neuron storage unit of the slave operation module

S7 — based on the control signal translated by the COMPUTE instruction, the second operation unit of the slave operation module reads a weight vector from the weight storage unit, completes the operation of multiplying vector by scalar for the weight and the input gradient vector, and returns the output vector through the interconnect module; simultaneously the slave operation module multiplies the input gradient by the input neuron to obtain a weight gradient for being stored in the weight gradient storage unit

S8 — in the interconnection module, each output gradient part sum returned by the slave operation module obtains a complete output gradient vector

S9 — the master operation module obtains the returned value of the interconnection, and based on the control signal translated by the COMPUTE instruction, reads a derivative value of the activation function upon the forward propagation process from the neuron storage unit, multiplies the derivative value by the returned output vector to obtain an input gradient vector for the backward training of next layer and writes it back to the first neuron storage unit

S10 — the controller unit then reads the next COMPUTE instruction, and based on the translated control signal, the slave operation module reads a weight w from the weight storage unit, reads a dw and the weight gradient dw' used in previous updating of the weight from the weight gradient storage unit, and updates the weight w

S11 — then the controller unit reads the next IO instruction, and based on the translated control signal, the data access unit saves the output gradient in the first neuron storage unit to a designated address in the external address space; finally, the operation ends

FIG 7

# INTERNATIONAL SEARCH REPORT

| International application No. |
|---|
| **PCT/CN2016/081114** |

## A. CLASSIFICATION OF SUBJECT MATTER

G06N 3/08 (2006.01) i

According to International Patent Classification (IPC) or to both national classification and IPC

## B. FIELDS SEARCHED

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

WPI; EPODOC; CNKI; CNPAT: neural, network, reverse, layer, train+, gradient, vector, connect+

## C. DOCUMENTS CONSIDERED TO BE RELEVANT

| Category* | Citation of document, with indication, where appropriate, of the relevant passages | Relevant to claim No. |
|---|---|---|
| A | CN 103150596 A (BAIDU ONLINE NETWORK TECHNOLOGY (BEIJING) CO., LTD.), 12 June 2013 (12.06.2013), description, paragraphs [0030]-[0035], and figures 2-5 | 1-11 |
| A | CN 103996069 A (BAIDU ONLINE NETWORK TECHNOLOGY (BEIJING) CO., LTD.), 20 August 2014 (20.08.2014), the whole document | 1-11 |
| A | US 5517596 A (INTERNATIONAL BUSINESS MACHINES CORPORATION), 14 May 1996 (14.05.1996), the whole document | 1-11 |

☐ Further documents are listed in the continuation of Box C.      ☒ See patent family annex.

| | |
|---|---|
| \*     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 13 January 2017 (13.01.2017) | **03 February 2017 (03.02.2017)** |

| Name and mailing address of the ISA/CN: | Authorized officer |
|---|---|
| State Intellectual Property Office of the P. R. China No. 6, Xitucheng Road, Jimenqiao Haidian District, Beijing 100088, China Facsimile No.: (86-10) 62019451 | **FENG, Tingting** Telephone No.: (86-10) **62413577** |

Form PCT/ISA/210 (second sheet) (July 2009)

## INTERNATIONAL SEARCH REPORT
### Information on patent family members

| International application No. |
| --- |
| **PCT/CN2016/081114** |

| Patent Documents referred in the Report | Publication Date | Patent Family | Publication Date |
| --- | --- | --- | --- |
| CN 103150596 A | 12 June 2013 | None | |
| CN 103996069 A | 20 August 2014 | None | |
| US 5517596 A | 14 May 1996 | US 5613044 A | 18 March 1997 |
| | | US 5483620 A | 09 January 1996 |

Form PCT/ISA/210 (patent family annex) (July 2009)